(19) **Europäisches Patentamt**
**European Patent Office**
**Office européen des brevets**

(11) **EP 2 103 974 A1**

(12) **EUROPEAN PATENT APPLICATION**

(43) Date of publication:
**23.09.2009 Bulletin 2009/39**

(51) Int Cl.:
**G02B 6/124** (2006.01)          G02B 6/136 (2006.01)
**G02B 6/138** (2006.01)

(21) Application number: **09003915.7**

(22) Date of filing: **18.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 US 38483 P**

(71) Applicant: **Nitto Denko Corporation
Ibaraki-shi, Osaka 567-8680 (JP)**

(72) Inventors:
 • **Hu, Szu-Han
  Pathumthani 12130 (TH)**
 • **Thaveeprungsriporn, Visit
  Singapore 138633
   (SG)**

(74) Representative: **Grünecker, Kinkeldey,
Stockmair & Schwanhäusser
Anwaltssozietät
Leopoldstrasse 4
80802 München (DE)**

(54) **Optical waveguide having grating and method of forming the same**

(57)     An optical waveguide and process for forming an optical waveguide are provided. The optical waveguide includes a first cladding layer; a first waveguide core formed on the first cladding layer, the first waveguide core comprising a first long period grating formed in at least one sidewall of the first waveguide core; and a second cladding layer formed over the first waveguide core. The process for forming an optical waveguide includes forming a first waveguide core on a surface of a first cladding layer; patterning the first waveguide core with a long period grating that is perpendicular to a surface of the first cladding layer; and forming a second cladding layer on the first cladding layer so as to cover the first waveguide core.

## FIG. 1A

**Description**

CROSS REFERENCE TO RELATED APPLICATIONS

This application claims the benefit of priority of U.S. Provisional Application No. 61/038483, filed in the U.S. Patent and Trademark Office on March 21,2008, the entire contents of which is herein incorporated by reference.

BACKGROUND OF THE INVENTION

1. Field of the Invention

Apparatuses, devices, and methods consistent with the present invention relate to optical waveguides and, more particularly, to an optical waveguide sensor having a long period grating.

2. Description of the Related Art

In a related art optical waveguide, the characteristic of light transmission depends on the interface between a core and a cladding material and, more specifically, on the difference between the refractive index of the core and the refractive index of the cladding material.. Recently, long period gratings (LPGs) have been added to manipulate the light resonance between the core and the cladding material. The LPG couples the core guided mode with the cladding modes, propagating in the same direction. When a coupling between the guided mode and the cladding mode occurs, a relationship between those modes is given by

$$\lambda_0 \simeq (N_0 - N_m)\Lambda \qquad (1)$$

where $\lambda_0$ is a resonance wavelength, at which the guided mode and $m$-th cladding mode are coupling, $N_0$ is the effective refractive index of the guided mode, $N_m$ is the effective refractive index of the cladding mode, and $\Lambda$ is the grating period. The excitation of the cladding mode attenuates the light intensity of the guided mode after the LPG, which results in a resonant loss in the transmission spectrum.

The LPG is fabricated as either a phase grating, which periodically manipulates the material refractive index of the waveguide core by means of inscription, or by corrugation grating, which periodically creates geometrical features by means of material removal.

This fabrication process has a few disadvantages. For example, many different operations are involved, such as using laser inscription, laser cutting, thermal inscription, reactive ion beam (RIB) etching, and the like, Also, many different materials are involved, with each operation requiring a different equipment setup. Accordingly, the fabrication cycle time of the related art - optical waveguide is long and costly, and there are many constraints on the geometry of the optical waveguide.

SUMMARY OF THE PRESENT INVENTION

Exemplary embodiments of the present invention address the above disadvantages and other disadvantages not described above. However, the present invention is not required to overcome the disadvantages described above, and thus, an exemplary embodiment of the present invention may not overcome any of the disadvantages described above.

According to an exemplary embodiment of the present invention, there is provided an optical waveguide comprising a first cladding layer; a first waveguide core formed on the first cladding layer, the first waveguide core comprising a first long period grating formed in at least one sidewall of the first waveguide core; and a second cladding layer formed over the first waveguide core.

According to another exemplary embodiment of the present invention, there is provided a process for forming an optical waveguide, the process comprising forming a first waveguide core on a surface of a first cladding layer; patterning the first waveguide core with a long period grating that is perpendicular to a surface of the first cladding layer; and forming a second cladding layer on the first cladding layer so as to cover the first waveguide core.

BRIEF DESCRIPTION OF THE DRAWINGS

The above and other aspects of the present invention will become more apparent and more readily appreciated from the following description of exemplary embodiments of the present invention taken in conjunction with the attached drawings, in which:

Figs. 1A and 1B show a perspective view and a front view, respectively, of an optical waveguide according to a first exemplary embodiment of the present invention;

Figs. 2A and 2B show a perspective view and a front view, respectively, of an optical core array waveguide according to a second exemplary embodiment of the present invention;

Fig. 3 shows a front view of another example of an optical core array waveguide;

Figs. 4A and 4B show a perspective view and a front view, respectively, of a stacked optical core array waveguide according to a fourth exemplary embodiment of the present invention;

Fig. 5 shows a front view of another example of a stacked optical core array waveguide; and

Figs. 6A to 6I show perspective views illustrating a process for making an optical waveguide according to an exemplary embodiment of the present invention.


DETAILED DESCRIPTION OF EXEMPLARY EMBODIMENTS OF THE PRESENT INVENTION

Exemplary embodiments of the present invention will now be described with reference to the accompanying drawings. In the following description, like reference numerals refer to like elements throughout.

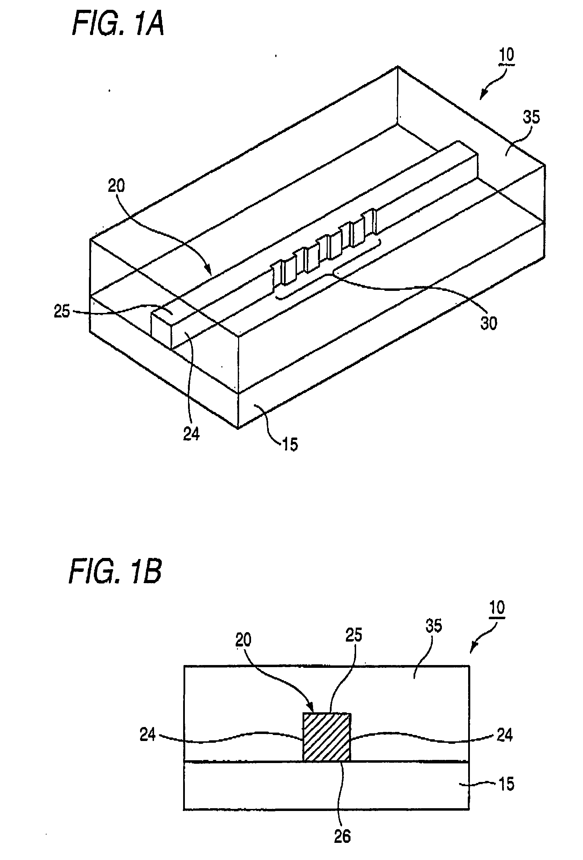

Turning now to Figs. 1A and 1B, an optical waveguide 10 according to a first exemplary embodiment of the present invention is shown. The optical waveguide includes a first cladding layer 15 as an undercladding layer. A waveguide core 20 is disposed on top of the first cladding layer 15. The waveguide core 20 is generally rectangular in shape, and has two sidewalls 24, a bottom surface 26 and a top surface 25, extending in the length direction. The waveguide core 20 includes a long period grating 30, which is formed in a portion of at least one of the two sidewalls 24. Alternatively, the long period grating 30 may be formed in portions of both sidewalls 24 of the waveguide core 20. A second cladding layer 35 is formed on top of the first cladding layer 15 and covers the waveguide core 20.

Fig. 1B shows a front view of the optical waveguide 10. In Fig. 1A, the height and width of the waveguide core 20 are shown as roughly square. However, as shown in Fig. 1B, the height and width of the waveguide core 20 may alternatively be rectangular in the height and width direction.

The first cladding layer 15 may be of any thickness as long as the cladding mode is confined to the second cladding layer 35. The waveguide core 20 shown in Fig. 1A has dimensions of about 5 $\mu$m by about 5 $\mu$m in the height and width direction respectively. The second cladding layer 35 has a thickness of about 10 $\mu$m.

The first cladding layer 15, the second cladding layer 35, and the waveguide core 20 are each made of a polymer material, which is sensitive to ultraviolet light. The polymer materials are selected based on the refractive indices of the materials. A relationship among the refractive indices of the waveguide core 20, the first cladding layer 15 and the second cladding layer 35 is $n_{(core)} > n_{(cled\ 2)} > n_{(clnd\ 1)}$, where $n_{(core)}$ denotes the refractive index of the waveguide core 20, $n_{(clad\ 1)}$ denotes the refractive index of the first cladding layer 15, and $n_{(clad\ 2)}$ denotes the refractive index of the second cladding layer 35. Under this relationship for the refractive indices of the waveguide core 20, the first cladding layer 15 and the second cladding layer 35, the cladding mode propagates in the second cladding layer. Alternatively, the relationship of the refractive indicies may be $n_{(core)} > n_{(clad\ 1)} > n_{(clad\ 2)}$, in which case the cladding mode propagates in the first cladding layer.

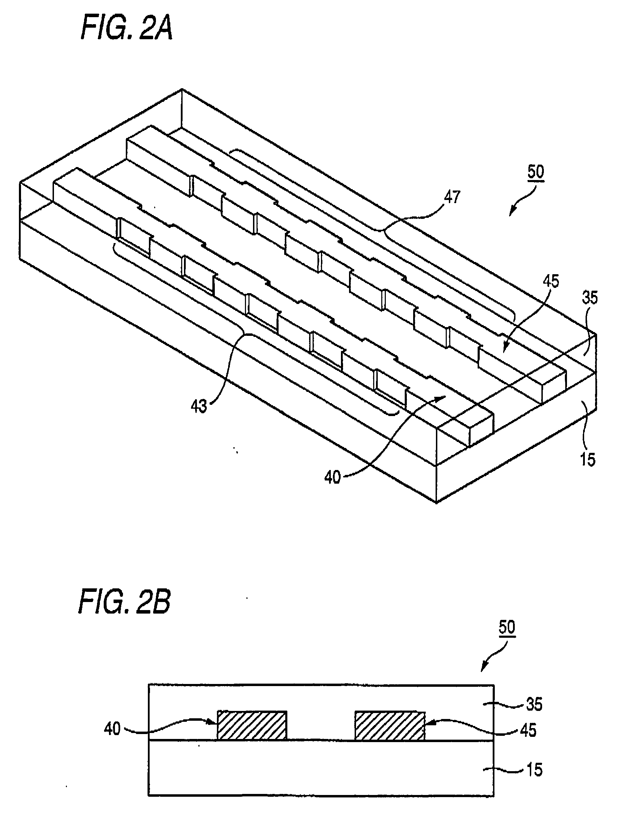

Turning to Figs. 2A and 2B, an optical waveguide 50 according to a second exemplary embodiment of the invention is shown. The first cladding layer 15 and the second cladding layer 35 are the same as in the first exemplary embodiment described above. In the second exemplary embodiment, two waveguide cores are provided including a first waveguide core 40 and a second waveguide core 45. The first waveguide core 40 and the second waveguide core 45 are separated from each other and run substantially parallel to each other in the length direction. Alternatively, the first waveguide core 40 may be deviated by a given angle from the second waveguide core 45.

The first waveguide core 40 includes a first long period grating 43, and the second waveguide core 45 includes a second long period grating 47. In contrast to the first exemplary embodiment described above, the first long period grating 43 is provided in both sidewalls of the first waveguide core 40, and the second long period grating 47 is provided in both sidewalls of the second waveguide core 45. Alternatively, the first long period grating 43 and the second long period grating 47 may be provided in only one sidewall of the first waveguide core 40 and the second waveguide core 45, respectively. The period of the first long period grating 43 and the second long period grating 47 are substantially the same. However, alternatively, the periods may be different Additionally, the depth of the first long period grating 43 and the second long period grating 47 are substantially the same. However, alternatively, the depths may be different.

The refractive indices of the first waveguide core 40 and the second waveguide core 45 are substantially the same. As in the first exemplary embodiment described above, the materials are polymer materials selected to satisfy the relationship $n_{(core)} > n_{(clad\ 2)} > n_{(clad\ 1)}$. Alternatively, the polymer materials may be selected to satisfy the relationship $n_{(core)} > n_{(clad\ 1)} > D_{(clad\ 2)}$.

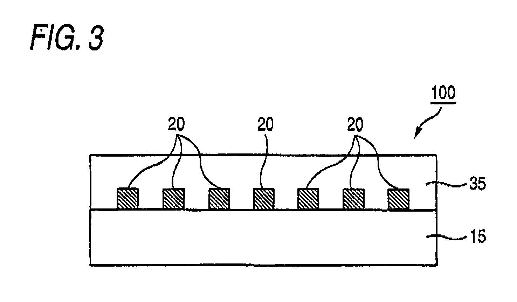

As shown in Fig. 3, a waveguide core of an optical waveguide may also be formed as a core array. This configuration may be used, for example, to form an optical waveguide sensor. As shown in Fig. 3, an optical waveguide 100 includes a first cladding layer 15 and a second cladding layer 35, both of which are the same as in the first exemplary embodiment. The waveguide core of the optical waveguide 100 includes a plurality of waveguide cores 20. Each of the plurality of waveguide cores 20 is the same as the optical waveguide core 20 of the first exemplary embodiment, and includes a long period grating. The long period gratings of the individual waveguide cores 20 may have a same period or different periods, and may be of the same depth or different depths. The polymer materials are the same as described above with respect to the first exemplary embodiment.

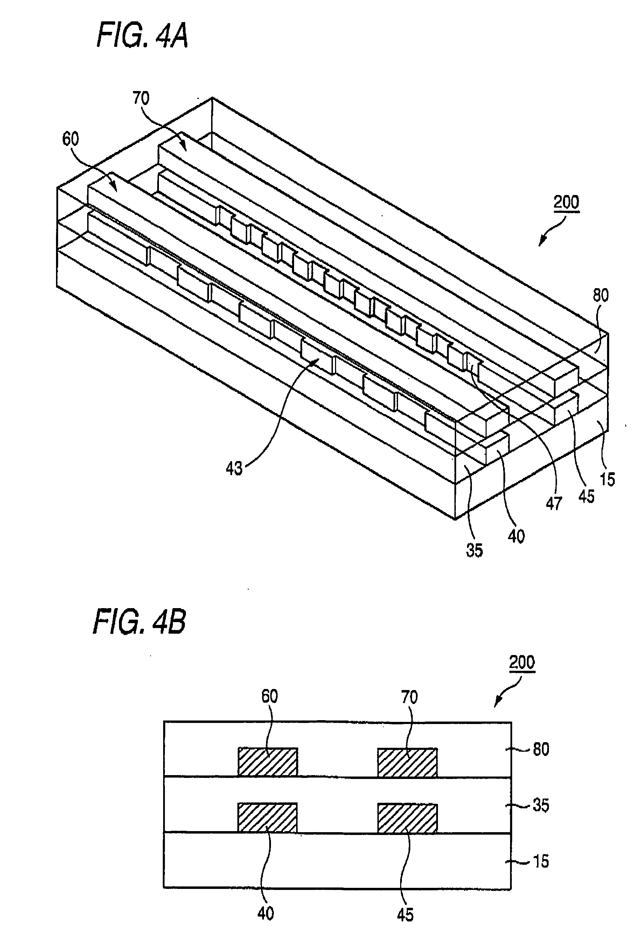

Figs. 4A and 4B show an optical waveguide according to a third exemplary embodiment of the present invention. The optical waveguide 200 according to the third exemplary embodiment includes a plurality of waveguide cores arranged in a stacked configuration. This configuration also may be used, for example, to form an optical waveguide sensor. The optical waveguide 200 includes a first cladding layer 15, a second cladding layer 35, a first waveguide core 40, and a second waveguide core 45, each of which is the same as in the second exemplary embodiment described above and hence a repeated description will be omitted. The first waveguide core 40 and the second waveguide core 45 respectively include the first long period grating 43 and the second long period grating 45, which are also the same as in the second exemplary embodiment.

The optical waveguide 200 further includes a third waveguide core 60 and a fourth waveguide core 70. The third waveguide core 60 and the fourth waveguide core 70 are each substantially the same as the optical waveguide core 20 of the first exemplary embodiment. The third waveguide core 60 and the fourth waveguide core 70 are formed on top of the second cladding layer 35. A third cladding layer 80 is formed over the second cladding layer 35, and covers the third waveguide core 60 and the fourth waveguide core 70. Thus, the third waveguide core 60, the fourth waveguide core 70, and the third cladding layer 80 form a second optical layer, that is stacked on top of a first optical layer, which includes the first cladding layer 15, the first and second waveguide cores 40, 45, and the second cladding layer 35.

As shown in Fig. 4A and 4B, the third waveguide core 60 and the fourth waveguide core 70 of the second optical layer are formed without any long period gratings. As an alternative, the third waveguide core 60 and the fourth waveguide core 70 may include respective long period gratings having the same or different periods, and the same or different depths.

The third waveguide core 60 and the fourth waveguide core 70 are formed in parallel over the first waveguide core 40 and the second waveguide core 45, respectively, such that each of the first waveguide core 40, the second waveguide core 45, the third waveguide core 60 and the fourth waveguide core 70 run in parallel to one another in the length direction. However, the second optical layer may alternatively be deviated by a certain angle from the first optical layer such that the third and fourth waveguide cores 60, 70 are deviated from the first and second waveguide cores 40, 45.

The polymer materials of the first cladding layer 15, the second cladding layer 35, the third cladding layer 80, and the first, second, third, and fourth waveguide cores 40, 45, 60, 70 are selected based on their respective refractive indexes. The materials for the first, second, third, and fourth waveguide cores 40, 45, 60, 70 are selected such that the refractive index of the first, second, third, and fourth waveguide cores 40, 45, 60, 70 are the same. The materials are selected to satisfy the following relationship: $n_{(core)} > n_{(clad\ 2)} > n_{(clad\ 1)} \geqq n_{(clad\ 3)}$ or $n_{(core)} > n_{(clad\ 2)} > n_{(clad\ 3)} \geqq n_{(clad\ 1)}$, where $n_{(core)}$ denotes the refractive index of the waveguide cores, $n_{(clad\ 1)}$ denotes the refractive index of the first cladding layer 15, and $n_{(clad\ 2)}$ denotes the refractive index of the second cladding layer 35, and $n_{(clad\ 3)}$ denotes the refractive index of the third cladding layer 80. Under this relationship of the refractive indexes, the cladding-mode propagates in the second cladding layer. Alternatively, the polymer materials may be selected according to the following relationship in which the cladding-mode propagates in the third cladding layer: $n_{(core)} > n_{(clad\ 3)} > n_{(clad\ 2)} \geqq n_{(clad1)}$ or $n_{(core)} > n_{(clad\ 3)} > n_{(clad\ 1)} \geqq n_{(clad\ 2)}$.

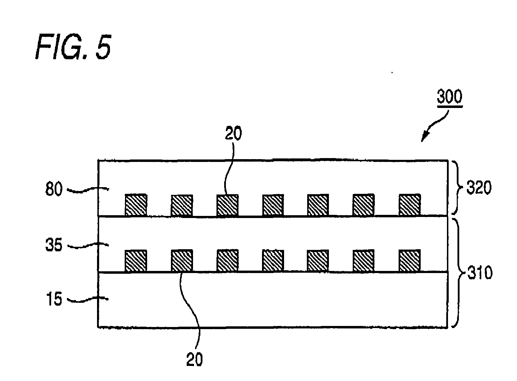

While the third exemplary embodiment is shown with two waveguide cores in each of the first optical layer and the second optical layer, the number of waveguide cores in each layer may be more than two. Thus, as shown in Fig. 5, an optical waveguide 300 may also be provided with a first core array including a plurality of waveguide cores 20 arranged in the first optical layer 310, and a second core array including a plurality of waveguide cores 20 arranged in the second optical layer 320. As in the preceding exemplary embodiments, each of the waveguide cores in each of the layers is provided with a respective long period grating, and the respective long period grating may be provided in one or both sidewalls of the waveguide core. Alternatively, some layers may be provided with respective long period gratings and other layers may be provided without long period gratings, as long as at least one layer is provided with long period gratings.

As in the preceding exemplary embodiments, the polymer materials of the first cladding layer 15, the second cladding layer 35, the third cladding layer 80, and the waveguide cores 20 are selected based on their respective refractive indexes. The materials are selected to satisfy the following relationship: $n_{(core)} > n_{(clad\ 2)} > n_{(clad\ 1)} \geqq n_{(clad\ 3)}$ or $n_{(core)} > n_{(clad\ 2)} > n_{(clad\ 3)} \geqq n_{(clad\ 1)}$, where $n_{(core)}$ denotes the refractive index of the waveguide cores, $n_{(clad\ 1)}$ denotes the refractive index of the first cladding layer 15, and $n_{(clad\ 2)}$ denotes the refractive index of the second cladding layer 35, and $n_{(clad\ 3)}$ denotes the refractive index of the third cladding layer 80. Under this relationship of the refractive indexes, the cladding-mode propagates in the second cladding layer. Alternatively, the polymer materials may be selected according to the following relationship in which the cladding-mode propagates in the third cladding layer: $n_{(core)} > n_{(clad\ 3)} > n_{(clad\ 2)} \geqq n_{(clad\ 1)}$ or $n_{(core)} > n_{(clad\ 3)} > n_{(clad\ 1)} \geqq n_{(clad\ 2)}$.

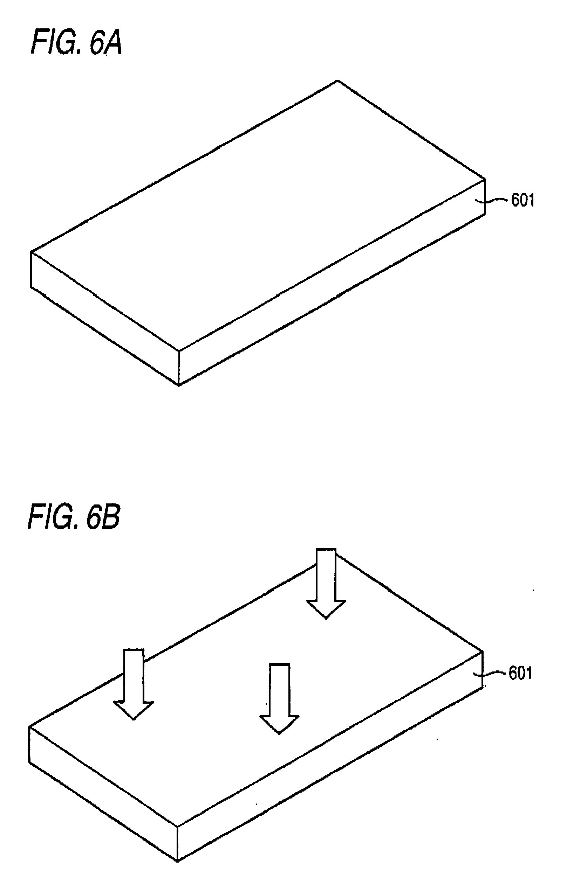

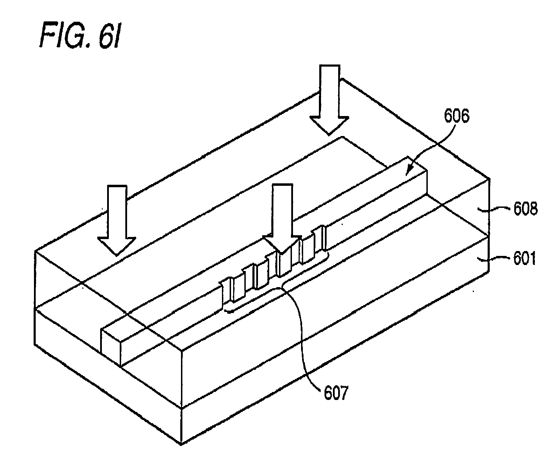

Turning now to Figs. 6A to 6I, a process for manufacturing an optical waveguide according to an exemplary embodiment of the present invention is shown and will now be described.

As shown in Fig. 6A, a first cladding layer 601 is formed from a polymer material, The polymer material is sensitive to ultraviolet light. In Fig. 6B, the first cladding layer 601 is exposed to ultraviolet light in order to set the refractive index of the first cladding layer 601.

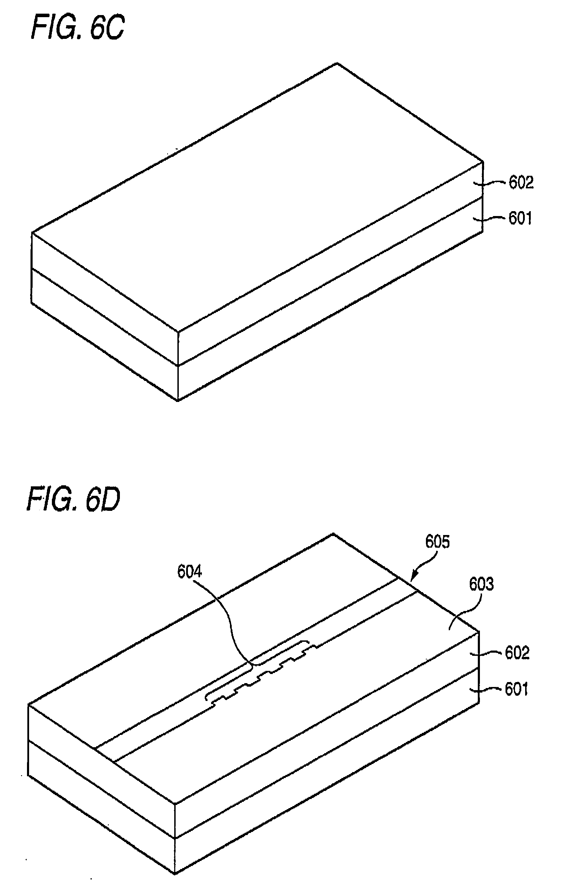

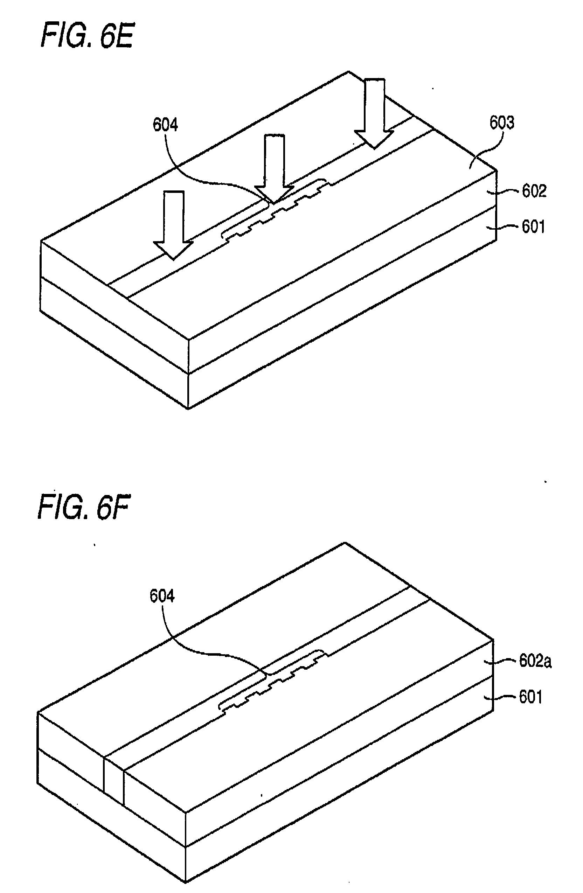

In Fig. 6C, a core layer 602 is formed on top of the first cladding layer 601, and covers the first cladding layer 601. The material used for the core layer 602 is a polymer material having a certain refractive index. In Fig. 6D, a photolithography mask 605 is aligned on top of the core layer 602. The photolithography mask 605 includes a channel 605 and a long period grating 604 formed in one side of the channel 605. In this exemplary embodiment, the long period gating 604 is formed in only one side of the channel 605. However, alternatively, the long period grating 604 may be formed in both sides of the channel 605. The photolithography mask 605 is then exposed to ultraviolet light, as shown in Fig. 6E.

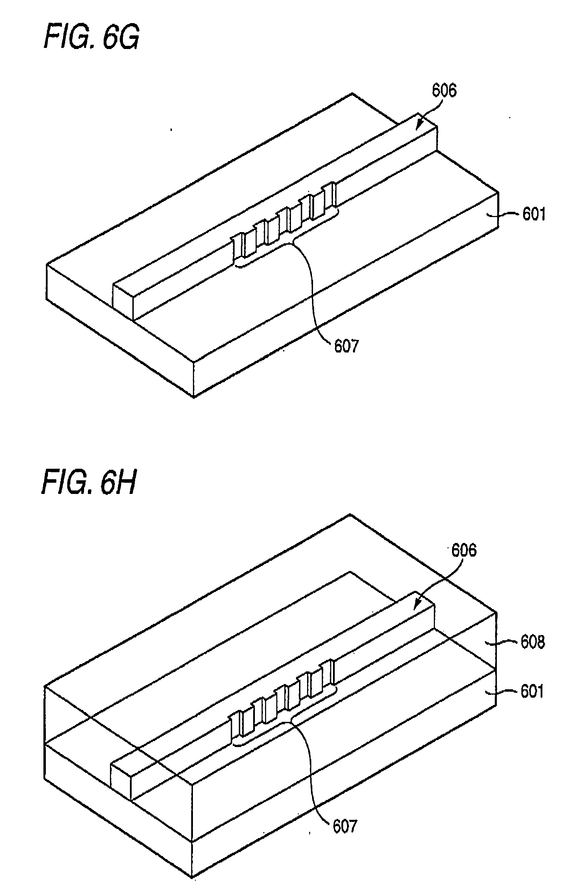

The photolithography mask 605 is then removed, as shown in Fig. 6F, and the core layer 602 is developed in order to form a waveguide core 606, as shown in Fig. 6G. The waveguide core 606 includes a long period grating 607, which is in an inverse relationship to the long period grating 604 of the channel 605. Accordingly, the long period grating 607 is in one side of the waveguide core 606. However, as described above, the long period grating 607 may be provided in both sides of the waveguide core 606.

In Fig. 6H, a second cladding layer 608 is formed on top of the first cladding layer 601, and covers the waveguide core 606. The second cladding layer 608 is then exposed to ultraviolet light in order to set the refractive index.

Although the process has been described with respect to forming only one waveguide core 606, the process may be applied to produce a core array of a plurality of waveguides, each having a long period grating. In such a case, the photolithography mask is formed to correspond to the core array of a plurality of waveguides, and the core array is formed at one time using the mask. Each successive optical waveguide layer may then be formed by iterative application of the process.

While the present invention has been shown and described with reference to certain exemplary embodiments thereof, it will be understood by those skilled in the art that various changes in form and details may be made therein without departing from the spirit and scope of the invention as defined by the appended claims.

## Claims

1.   An optical waveguide comprising:

   a first cladding layer;
   a first waveguide core formed on the first cladding layer, the first waveguide core comprising a first long period grating formed in at least one sidewall of the first waveguide core; and
   a second cladding layer formed over the first waveguide core.

2.   The optical wavguide according to claim 1, wherein the optical waveguide is a optical polymer waveguide, and the first cladding layer, the first waveguide core, and the second cladding layer are each formed of polymer materials.

3.   The optical waveguide according to claim 1, wherein the first waveguide core comprises a plurality of waveguide cores arranged in a core array, and the first long period grating is formed in at least one sidewall of each of the plurality of waveguide cores.

4.   The optical waveguide according to claim 1, further comprising a second waveguide core formed on the first cladding layer,
   wherein the second cladding layer is formed over the first waveguide core and the second waveguide core, and the second waveguide core comprises a second long period grating formed in at least one sidewall of the second waveguide core.

5.   The optical waveguide according to claim 4, wherein the first long period grating and the second long period grating have different periods.

6.   The optical waveguide according to claim 4, wherein the second waveguide core is formed in parallel with the first waveguide core.

7. The optical waveguide according to claim 1, further comprising:

a second waveguide core formed on the second cladding layer above the first waveguide core; and
a third cladding layer formed over the second waveguide core.

8. The optical waveguide according to claim 7, wherein the second waveguide core is patterned with a second long period grating.

9. The optical waveguide according to claim 3, further comprising:

a second waveguide core comprises a plurality of second waveguide cores arranged in a core array, and the second long period grating is formed in at least one sidewall of each of the plurality of second waveguide cores.

10. The optical waveguide according to claim 4, further comprising:

a third waveguide core formed on top of the first waveguide core;
a fourth waveguide core formed on top of the second waveguide core; and
a third cladding layer formed on the second cladding layer so as to cover the third waveguide core and the fourth waveguide core.

11. The optical waveguide according to claim 10, wherein the third waveguide core comprises a third long period grating formed in at least one sidewall of the third waveguide core, and the fourth waveguide core comprises a fourth long period grating formed in at least one sidewall of the fourth waveguide core.

12. The optical waveguide according to claim 10, wherein the first waveguide core, the second waveguide core, the third waveguide core, and the fourth waveguide core are formed in parallel with one another.

13. A polymer waveguide optical sensor comprising:

a first polymer cladding layer;
a plurality of first photosensitive polymer channel waveguide cores arranged in parallel in a length direction on the first polymer cladding layer, each of the first photosensitive polymer channel waveguide cores comprising at least two sidewalls which are substantially perpendicular to a surface of the first polymer cladding layer and a first uniform long period grating which is patterned in at least one of the two sidewalls thereof; and
a second polymer cladding layer formed on the first polymer cladding layer so as to cover the plurality of first polymer channel waveguide cores.

14. The polymer waveguide optical sensor according to claim 13, further comprising:

a plurality of second photosensitive polymer channel waveguide cores arranged in parallel in a length direction on the second polymer cladding layer; and
a third polymer cladding layer formed on the second polymer cladding layer so as to cover the plurality of second polymer channel waveguide cores.

15. The polymer waveguide optical sensor according to claim 14, wherein each of the second photosensitive polymer channel waveguide cores comprises at least two sidewalls which are substantially perpendicular to a surface of the second polymer cladding layer and a second uniform long period grating which is patterned in at least one of the two sidewalls thereof.

16. A process for forming an optical waveguide, the process comprising:

forming a first waveguide core on a surface of a first cladding layer;
patterning the first waveguide core with a long period grating that is perpendicular to a surface of the first cladding layer; and
forming a second cladding layer on the first cladding layer so as to cover the first waveguide core.

17. The process according to claim 16, wherein the long period grating is patterned on the first waveguide core using a photo imaging process.

18. The process according to claim 16, wherein the long period grating is patterned on the first waveguide core using a thermal imprint process.

19. The process according to claim 16, wherein the long period grating is patterned on the first waveguide core using a photo imaging and a thermal imprint process.

20. A process for forming an optical waveguide sensor, the process comprising:

forming a first photosensitive polymer cladding layer;
forming a photosensitive polymer core layer on the first photosensitive polymer cladding layer;
aligning a mask over the photosensitive polymer core layer, the mask comprising rectangular opening comprising a uniform long period grating formed in at least one side of the rectangular opening;
exposing the photosensitive polyer core layer through the mask using ultraviolet radiation;
developing the exposed photosensitive polymer core layer to form a polymer channel waveguide core having the uniform long period grating formed in at least one sidewall thereof; and
forming a second polymer cladding layer over the first polymer cladding layer so as to cover the polymer channel waveguide core.

21. The process according to claim 20,
wherein the first polymer cladding layer is formed by:

providing a photosensitive polymer substrate; and
exposing the photosensitive polymer substrate using ultraviolet light; and

wherein the second polymer cladding layer is formed by:

disposing a photosensitive polymer layer over the first polymer cladding layer; and
exposing the photosensitive polymer layer using ultraviolet light.

*FIG. 1A*

*FIG. 1B*

8

# FIG. 2A

# FIG. 2B

## FIG. 3

FIG. 4A

FIG. 4B

FIG. 5

*FIG. 6A*

601

*FIG. 6B*

601

## FIG. 6C

## FIG. 6D

## FIG. 6E

## FIG. 6F

*FIG. 6G*

*FIG. 6H*

FIG. 6I

Europäisches
Patentamt
European
Patent Office
Office européen
des brevets

# EUROPEAN SEARCH REPORT

Application Number

EP 09 00 3915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br><br>Y | EP 0 826 988 A (LUCENT TECHNOLOGIES INC [US]) 4 March 1998 (1998-03-04)<br>* figures 1,5 *<br><br>* pages 2,4,5 *<br>-----<br>CHIANG Y LS ET AL: "Polymer long-period waveguide gratings"<br>OPTICAL FIBER COMMUNICATION CONFERENCE, 2004,,<br>vol. 1, 23 February 2004 (2004-02-23), pages 83-85, XP010744246<br>ISBN: 978-1-55752-772-1<br>* the whole document *<br>----- | 1,3-12, 16,17<br>2,13-15, 18-21<br><br>2,13-15, 18-21 | INV.<br>G02B6/124<br><br>ADD.<br>G02B6/136<br>G02B6/138 |
| X<br><br>A | US 2004/037503 A1 (HASTINGS JEFFREY T [US] ET AL) 26 February 2004 (2004-02-26)<br>* figures 1-9 *<br>-----<br>LIU QING ET AL: "Temperature sensitivity of a long-period waveguide grating in a channel waveguide"<br>APPLIED PHYSICS LETTERS, AIP, AMERICAN INSTITUTE OF PHYSICS, MELVILLE, NY, US,<br>vol. 86, no. 24, 9 June 2005 (2005-06-09), pages 241115-241115, XP012065851<br>ISSN: 0003-6951<br>* the whole document *<br>-----<br>-/-- | 1,3-6,9, 16,17<br><br>13-15, 20,21 | TECHNICAL FIELDS SEARCHED (IPC)<br><br>G02B |

The present search report has been drawn up for all claims

| Place of search | Date of completion of the search | Examiner |
|---|---|---|
| Munich | 8 June 2009 | Beutter, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 00 3915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOUDHURY ET AL: "Optimal design of silica-based temperature-insensitive long-period waveguide gratings for realization of athermal refractive-index sensor"<br>SENSORS AND ACTUATORS A, ELSEVIER SEQUOIA S.A., LAUSANNE, CH,<br>vol. 141, no. 2,<br>12 October 2007 (2007-10-12), pages 328-333, XP022452372<br>ISSN: 0924-4247<br>* the whole document * | 13-15, 20,21 | |
| A | US 6 654 532 B1 (TOMARU SATORU [JP] ET AL) 25 November 2003 (2003-11-25)<br>* figure 1 * | 7,8,10, 11,14,15 | |
| A | US 2004/105624 A1 (LEE KI DONG [KR] ET AL) 3 June 2004 (2004-06-03)<br>* figures 1A-1E * | 18,19 | |
| A | US 2005/089291 A1 (YAMADA HIROHITO [JP]) 28 April 2005 (2005-04-28)<br>* figure 10 * | 1 | TECHNICAL FIELDS SEARCHED (IPC) |
| A | US 2005/213905 A1 (YAMADA HIROHITO [JP]) 29 September 2005 (2005-09-29)<br>* figure 10 * | 1 | |
| A | US 2004/081398 A1 (JETTE STEPHANIE MARIE-JULIE [CA] ET AL) 29 April 2004 (2004-04-29)<br>* figure 4a * | 1 | |

The present search report has been drawn up for all claims

| Place of search | Date of completion of the search | Examiner |
|---|---|---|
| Munich | 8 June 2009 | Beutter, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 3915

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2009

| Patent document cited in search report | | Publication date | Patent family member(s) | | Publication date |
|---|---|---|---|---|---|
| EP 0826988 | A | 04-03-1998 | JP<br>US | 10082920 A<br>5796906 A | 31-03-1998<br>18-08-1998 |
| US 2004037503 | A1 | 26-02-2004 | NONE | | |
| US 6654532 | B1 | 25-11-2003 | JP<br>JP | 3326390 B2<br>2000019940 A | 24-09-2002<br>21-01-2000 |
| US 2004105624 | A1 | 03-06-2004 | KR | 20040043869 A | 27-05-2004 |
| US 2005089291 | A1 | 28-04-2005 | JP | 2005128419 A | 19-05-2005 |
| US 2005213905 | A1 | 29-09-2005 | JP | 2005275064 A | 06-10-2005 |
| US 2004081398 | A1 | 29-04-2004 | NONE | | |

EPO FORM P0459

For more details about this annex : see Official Journal of the European Patent Office, No. 12/82

**EP 2 103 974 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61038483 A